# EUROPÄISCHE PATENTANMELDUNG

(11) **EP 4 137 335 A1**
(43) Veröffentlichungstag der Anmeldung: **22.02.2023**
(21) Anmeldenummer: 22190490.7
(22) Anmeldetag: 16.08.2022
(51) Int. Cl.: B60D 1/06, B60R 9/06

(54) **KUPPLUNGSAUFSATZ FÜR EINE KUGELKOPFKUPPLUNG EINES KRAFTFAHRZEUGS UND VERFAHREN ZUM TRANSPORTIEREN MINDESTENS EINES TRANSPORTGUTES MITTELS EINES KUPPLUNGSAUFSATZES**

(30) Priorität: 17.08.2021 DE 102021209013
(71) Anmelder: Breinig, Thomas, 15230 Frankfurt/Oder (DE)
(72) Erfinder: Breinig, Thomas, 15230 Frankfurt/Oder (DE)
(74) Vertreter: Zucker, Volker

(57) **Zusammenfassung**

Die Erfindung betrifft einen Kupplungsaufsatz (1) für eine Kugelkopfkupplung (30) eines Kraftfahrzeugs, umfassend eine kupplungsseitige Komponente (2), mit einer Kugelkupplung (2-1), die eingerichtet ist zum Aufnehmen einer Kugel (31) der Kugelkopfkupplung (30), und einer Arretiereinrichtung (2-2), die eingerichtet ist zum mechanischen Fixieren der Kugelkupplung (2-1) an der Kugel (31), und einer mit der Kugelkupplung (2-1) fest verbundenen Kopplungseinrichtung (2-3); und eine transportable Komponente (3), mit einer komplementären Kopplungseinrichtung (3-1) zur Anordnung an einer Transportvorrichtung (10), wobei die kupplungsseitige Komponente (2) und die transportable Komponente (3) über die Kopplungseinrichtung (2-3) und die komplementäre Kopplungseinrichtung (3-1) mechanisch lösbar miteinander verbunden sind oder mechanisch lösbar miteinander verbunden werden können. Ferner betrifft die Erfindung ein Verfahren zum Transportieren mindestens eines Transportgutes mittels eines Kupplungsaufsatzes (1).

## Beschreibung

Die Erfindung betrifft einen Kupplungsaufsatz für eine Kugelkopfkupplung eines Kraftfahrzeugs und ein Verfahren zum Transportieren mindestens eines Transportgutes mittels eines Kupplungsaufsatzes.

Kraftfahrzeuge, insbesondere Personenkraftfahrzeuge, sind oft mit einer Anhängerkupplung ausgestattet, sodass das Kraftfahrzeug mit einem Anhänger verbunden werden kann. Hierdurch können Transportgüter transportiert werden. In der Regel kommen bei Personenkraftwagen hierbei Kugelkopfkupplungen zum Einsatz, bei denen an einer an dem Personenkraftwagen befestigten Kupplungsstange eine Kugel angeordnet ist, an der eine mit einer Deichsel des Anhängers verbundene Kugelkupplung angeordnet und fixiert wird. Es sind ferner Fahrradträger bekannt, die ausschließlich an einer solchen Kugel einer Kugelkopfkupplung befestigt werden können.

Ein Problem der voranstehend beschriebenen Transportmöglichkeiten ist, dass diese nur sehr unflexibel eingesetzt werden können. Ein beladener Anhänger lässt sich im abgekoppelten Zustand in der Regel nur schwer manuell steuern und zum Transportieren verwenden. Ein Fahrradträger des erwähnten Typs erschwert in der Regel den Zugang zum Kofferraum des Personenkraftwagens. Insgesamt sind die vorgenannten Lösungen hinsichtlich einer Flexibilität und eines Bedienkomforts unbefriedigend.

Der Erfindung liegt die Aufgabe zu Grunde, eine Vorrichtung und ein Verfahren zum Transportieren mindestens eines Transportgutes mittels einer solchen Vorrichtung zu schaffen, mit der insbesondere eine Flexibilität und ein Bedienkomfort verbessert werden können.

Die Aufgabe wird erfindungsgemäß durch einen Kupplungssaufsatz mit den Merkmalen des Patentanspruchs 1 und ein Verfahren mit den Merkmalen des Patentanspruchs 15 gelöst. Vorteilhafte Ausgestaltungen der Erfindung ergeben sich aus den Unteransprüchen.

Insbesondere wird ein Kupplungsaufsatz für eine Kugelkopfkupplung eines Kraftfahrzeugs geschaffen, umfassend eine kupplungsseitige Komponente, mit einer Kugelkupplung, die eingerichtet ist zum Aufnehmen einer Kugel der Kugelkopfkupplung, und einer Arretiereinrichtung, die eingerichtet ist zum mechanischen Fixieren der Kugelkupplung an der Kugel, und einer mit der Kugelkupplung fest verbundenen Kopplungseinrichtung; und eine transportable Komponente, mit einer komplementären Kopplungseinrichtung zur Anordnung an einer Transportvorrichtung, wobei die kupplungsseitige Komponente und die transportable Komponente über die Kopplungseinrichtung und die komplementäre Kopplungseinrichtung mechanisch lösbar miteinander verbunden sind oder mechanisch lösbar miteinander verbunden werden können.

Ferner wird insbesondere ein Verfahren zum Transportieren mindestens eines Transportgutes mittels eines Kupplungsaufsatzes nach einem der in dieser Offenbarung beschriebenen Ausführungsformen zur Verfügung gestellt, wobei eine Kugelkupplung einer kupplungsseitigen Komponente des Kupplungsaufsatzes an einer Kugel einer Kugelkopfkupplung eines Kraftfahrzeugs angeordnet und daran fixiert wird oder ist, wobei das mindestens eine Transportgut in und/oder an und/oder auf einer Transportvorrichtung mit einer daran angeordneten transportablen Komponente des Kupplungsaufsatzes angeordnet wird oder ist, und wobei die Transportvorrichtung mittels einer komplementären Kopplungseinrichtung der transportablen Komponente mit einer Kopplungseinrichtung der kupplungsseitigen Komponente mechanisch verbunden wird oder verbunden ist.

Der Kupplungsaufsatz und das Verfahren ermöglichen es, ein Transportgut flexibler transportieren zu können. Hierzu ist vorgesehen, dass das Transportgut mittels einer Transportvorrichtung transportiert wird und hierzu in und/oder an und/oder auf der Transportvorrichtung angeordnet ist oder angeordnet wird. Um die Transportvorrichtung an dem Kraftfahrzeug zu befestigen, wird ein Kupplungsaufsatz verwendet, der aus zwei Komponenten besteht. Eine kupplungsseitige Komponente wird an der Kugel der Kugelkopfkupplung angeordnet und daran fixiert und verbleibt an der Kugel. Eine transportable Komponente ist an der Transportvorrichtung angeordnet und fest mit dieser verbunden und verbleibt an der Transporteinrichtung. Um die Transportvorrichtung an dem Kraftfahrzeug zu befestigen, muss eine mechanische Verbindung zwischen der kupplungsseitigen Komponente und der transportablen Komponente ausgebildet werden, indem die Kopplungseinrichtung der kupplungsseitigen Komponente und die komplementäre Kopplungseinrichtung der transportablen Komponente mechanisch miteinander verbunden werden. Ein umständliches Ausbilden und Lösen der mechanischen Verbindung zur Kugel der Kugelkopfkupplung ist hingegen nicht mehr notwendig.

Der Kupplungsaufsatz ermöglicht es insbesondere, einen schnellen Wechsel von Transportvorrichtungen zu vereinfachen. So lassen sich flexibel und an verschiedene Transportprobleme angepasste Lösungen sowohl für einen professionellen als auch einen privaten Anwendungsbereich bereitstellen. Beispielsweise kann für dasselbe Kraftfahrzeug eine Transportvorrichtung für Werkzeug, eine Transportvorrichtung für eine Tauchausrüstung, eine Transportvorrichtung für erlegtes Wild usw. vorgesehen sein. Je nach Bedarf können die jeweils mit einer transportablen Komponente versehenen Transportvorrichtungen an die kupplungsseitige Komponente angeordnet und mit dieser gekoppelt werden, sodass das jeweilige Transportgut zusammen mit der jeweiligen Transportvorrichtung auf bzw. an der Kugelkopfkupplung des Kraftfahrzeugs transportiert werden kann.

Der Kupplungsaufsatz ist insbesondere derart ausgebildet und wird derart mit der Kugel der Kugelkopfkupplung verbunden, dass die kupplungsseitige Komponente an einer vom Kraftfahrzeug abgewandten Seite der kupplungsseitigen Komponente mit der transportablen Komponente gekoppelt wird bzw. gekoppelt ist. Anders ausgedrückt ist bzw. wird die Transportvorrichtung mit Bezug auf das Kraftfahrzeug insbesondere von hinten über den Kupplungsaufsatz an das Kraftfahrzeug angekoppelt.

Die Transportvorrichtung kann beispielsweise eine Transportbox, einen Transportschrank, einen Transportrost, einen Transportkorb, einen Transportträger und/oder einen Transportrahmen umfassen.

Insbesondere ist vorgesehen, dass die Transportvorrichtung über den Kupplungsaufsatz ausschließlich mit dem Kraftfahrzeug verbunden ist. Insbesondere ist die Transportvorrichtung im angekoppelten Zustand der Kopplungseinrichtung und der komplementären Kopplungseinrichtung nicht mit einem Untergrund verbunden. Die Transportvorrichtung wird daher insbesondere nicht wie ein Anhänger hinter dem Kraftfahrzeug hergezogen, sondern ist an dem Fahrzeug angeordnet, ohne eigenen Kontakt zum Untergrund.

Die Kopplungseinrichtung und die komplementäre Kopplungseinrichtung können über eine Schraubverbindung, eine Rastverbindung, eine Klemmverbindung und/oder eine Steckverbindung miteinander verbunden sein oder verbunden werden. Die Kopplungseinrichtung und die komplementäre Kopplungseinrichtung weisen daher geeignete (komplementär zueinander ausgebildete) Schraubmittel, Rastmittel, Klemmmittel und/oder Steckmittel etc. auf.

Als Werkstoff für den Kupplungsaufsatz kann insbesondere Stahl verwendet werden. Beispielsweise kann die Kugelkupplung aus Stahlguss hergestellt werden. Andere Teile der kupplungsseitigen Komponente und/oder der transportablen Komponente können beispielsweise aus Stahlblech hergestellt werden oder ein solches umfassen, insbesondere mit einer geeigneten bzw. ausreichenden Materialstärke von mehreren Millimetern. Die angegebenen Werkstoffe und Materialstärken sind lediglich beispielhaft genannt. Grundsätzlich können auch andere geeignete Werkstoffe und/oder Materialstärken verwendet werden.

Wenn in dieser Offenbarung die Begriffe horizontal oder vertikal verwendet werden, so beziehen sich diese Begriffe insbesondere immer auf einen Zustand, bei dem die transportable Komponente und die kupplungsseitige Komponente miteinander verbunden sind und der Kupplungsaufsatz an der Kugelkopfkupplung des Kraftfahrzeugs angeordnet ist.

In einer Ausführungsform ist vorgesehen, dass die Kopplungseinrichtung und die komplementäre Kopplungseinrichtung mittels eines Riegels miteinander ver- und entriegelbar sind. Hierdurch kann das An- und Abkoppeln besonders einfach gesichert werden. Zum An- und Abkoppeln wird dann jedes Mal der Riegel in eine Entriegelungsstellung gebracht. Der Riegel kann beispielsweise einen Handhebel umfassen, mit dem insbesondere das Entriegeln durch manuelles Bewegen des Riegels in die Entriegelungsstellung aktiv bewirkt werden kann. Es können jedoch auch elektromechanische Riegel vorgesehen sein, die beispielsweise durch Tastendruck und/oder Funksignal betätigt werden können.

In einer Ausführungsform ist vorgesehen, dass die Kopplungseinrichtung ein bei Anordnung der Kugelkupplung an der Kugel horizontal verlaufendes erstes Querverbindungselement aufweist, wobei die Kopplungseinrichtung vertikal beabstandet hierzu ein horizontal verlaufendes zweites Querverbindungselement aufweist, das um eine parallel zum zweiten Querverbindungselement verlaufende horizontale Drehachse schwenkbar ist, sodass durch eine Schwenkbewegung ein Abstand zwischen dem ersten Querverbindungselement und dem zweiten Querverbindungselement im Bereich zwischen einer Verriegelungsstellung und einer Entriegelungsstellung des zweiten Querverbindungselements verringert oder vergrößert werden kann; und wobei die komplementäre Kopplungseinrichtung mindestens ein Trägerelement aufweist, das eine obere Ausnehmung und eine untere Ausnehmung aufweist, die bei Anordnung der komplementären Kopplungseinrichtung an der Kopplungseinrichtung zumindest teilweise um die Querverbindungselemente herum greifen. Hierdurch kann die Kopplung zwischen der komplementären Kopplungseinrichtung und der Kopplungseinrichtung besonders einfach, insbesondere aus Sicht eines Nutzers in kraftsparender Weise, ausgebildet werden. Die Ausnehmungen können auch als Hakenmäuler bezeichnet werden. Die Ausnehmungen sind insbesondere auf ein Zusammenwirken mit den Querverbindungselementen eingerichtet. Die Ausnehmungen bzw. Hakenmäuler weisen insbesondere zumindest abschnittsweise eine kreisförmige bzw. runde Kontur auf. Die komplementäre Kopplungseinrichtung weist insbesondere mindestens zwei solcher Trägerelemente auf.

In einer Ausführungsform des Verfahrens ist entsprechend vorgesehen, dass zum Koppeln der komplementären Kopplungseinrichtung mit der Kopplungseinrichtung zuerst über eine untere Ausnehmung von mindestens einem Trägerelement der komplementären Kopplungseinrichtung eine mechanische Verbindung mit einem ersten Querverbindungselement der Kopplungseinrichtung hergestellt wird, bei der die untere Ausnehmung das erste Querverbindungselement umgreift, und anschließend die komplementäre Kopplungseinrichtung mit der hieran angeordneten Transportvorrichtung zusammen um das erste Querverbindungselement herum geschwenkt wird, sodass eine obere Ausnehmung des mindestens einen Trägerelementes in eine Position gebracht wird, in der ein zweites Querverbindungselement der Kopplungseinrichtung in die obere Ausnehmung eingebracht werden kann und die obere Ausnehmung um das zweite Querverbindungselement herum greifen kann. Insbesondere sind mindestens zwei solcher Trägerelemente mit jeweils einer oberen Ausnehmung und einer unteren Ausnehmung vorgesehen.

Die Querverbindungselemente sind insbesondere zylinderförmig. Derartige zylinderförmige Querverbindungselemente können insbesondere auch als Bolzen bezeichnet werden.

Insbesondere ist vorgesehen, dass die kupplungsseitige Komponente mit der Kugelkupplung verbundene Trägerelemente aufweist. Insbesondere ist vorgesehen, dass die Querverbindungselemente sich zwischen den Trägerelementen befinden. Das erste Querverbindungselement ist insbesondere mit den Trägerelementen mechanisch fest verbunden, beispielsweise verschraubt oder verschweißt.

In einer Ausführungsform ist vorgesehen, dass das mindestens eine Trägerelement parallel zueinander im gekoppelten Zustand vertikal verlaufende Trägerplatten umfasst, wobei die obere Ausnehmung jeweils an einer oberen Kante der Trägerplatten und die untere Ausnehmung jeweils an einer unteren Kante der Trägerplatten angeordnet sind. Dies ermöglicht das einfache und kraftsparende Ankoppeln der transportablen Komponente mit der daran angeordneten Transportvorrichtung an der kupplungsseitigen Komponente. Ferner können durch das Verwenden der Trägerplatten Volumen und Gewicht eingespart werden, ohne eine Stabilität zu verringern. Ein Trägerelement kann insbesondere auch als eine solche Trägerplatte ausgebildet sein.

In einer Ausführungsform ist vorgesehen, dass die Trägerplatten an einer oberen Ecke an einer beim Ankoppeln in Richtung der Kopplungseinrichtung weisenden Seite abgeschrägt sind. Hierdurch kann eine Konstruktion des Kupplungsaufsatzes vereinfacht, insbesondere verkleinert werden, da die Trägerplatten hierdurch leichter an dem zweiten Querverbindungselement entlang in die oberen Ausnehmungen hinein und aus der oberen Ausnehmung hinaus geschwenkt werden können. Anders ausgedrückt sind die Trägerplatten hierdurch derart ausgestaltet, dass diese das Ein- und Ausschwenken nicht behindern. Ferner kann die transportable Komponente hierdurch nach Verbinden der unteren Ausnehmungen mit dem ersten Querverbindungselement durch Schwenken um das erste Querverbindungselement an die kupplungsseitige Komponente angekoppelt werden, ohne dass eine Verriegelung aktiv betätigt werden muss, da das zweite Querverbindungselement vermittelt durch den jeweils abgeschrägten Teil der Trägerplatten von der Verriegelungsstellung in die Entriegelungsstellung geschoben werden kann und erst nach Erreichen der oberen Ausnehmungen bzw. Einrasten in die oberen Ausnehmungen wieder in die Verriegelungsstellung zurückspringt.

In einer Ausführungsform ist vorgesehen, dass die kupplungsseitige Komponente mindestens ein Federelement aufweist, das derart an dem zweiten Querverbindungselement angeordnet ist, dass das zweite Querverbindungselement mittels des mindestens einen Federelements in die Verriegelungsstellung gezogen wird. Hierdurch wird das zweite Querverbindungselement ohne Aufbringen einer der Federkraft entgegengesetzten Kraft stets in der Verriegelungsstellung gehalten. Dies erhöht eine Sicherheit der Verbindungen zwischen der transportablen Komponente und der kupplungsseitigen Komponente. Das mindestens eine Federelement ist insbesondere eine Schraubenzugfeder. Diese kann beispielsweise auf der einen Seite mit dem zweiten Querverbindungselement und auf der anderen Seite mit dem ersten Querverbindungselement verbunden sein, sodass das zweite Querverbindungselement durch die Zugkraft der Schraubenzugfeder in Richtung des ersten Querverbindungselements gezogen wird.

In einer Ausführungsform ist vorgesehen, dass der Kupplungsaufsatz mindestens einen an der Kopplungseinrichtung und/oder an der komplementären Kopplungseinrichtung angeordneten Verriegelungsstift aufweist, der derart angeordnet und dazu eingerichtet ist, im gekoppelten Zustand in hierfür vorgesehene Bohrungen der Kopplungseinrichtung und/oder der komplementären Kopplungseinrichtung einzugreifen und hierdurch ein Lösen der mechanischen Verbindung zwischen der Kopplungseinrichtung und der komplementären Kopplungseinrichtung zu verhindern. Hierdurch kann eine zusätzliche Sicherung gegen ein Abkoppeln der transportablen Komponente (insbesondere zusammen mit der Transportvorrichtung) von der kupplungsseitigen Komponente geschaffen werden. Der Verriegelungsstift kann beispielsweise durch eine Feder in einer Verriegelungsstellung gehalten werden.

In einer weiterbildenden Ausführungsform ist vorgesehen, dass der Kupplungsaufsatz mindestens ein Schloss aufweist, mit dem der mindestens eine Verriegelungsstift zumindest im gekoppelten Zustand der Kopplungseinrichtung und der komplementären Kopplungseinrichtung gesichert werden kann. Hierdurch kann eine Diebstahlsicherung bzw. eine Sicherung gegen unerlaubtes Abkoppeln oder Ankoppeln geschaffen werden. Das mindestens eine Schloss kann mechanisch und/oder elektromechanisch ausgebildet sein. Beispielsweise kann das Schloss als Schlüsselschloss oder Zahlenschloss ausgebildet sein. Auch eine Ent- und/oder Verriegelung mittels eines Funksignals (z.B. RFID) kann vorgesehen sein.

Ferner wird auch eine kupplungsseitige Komponente für einen Kupplungsaufsatz nach einer der beschriebenen Ausführungsformen geschaffen, umfassend eine Kugelkupplung, die eingerichtet ist zum Aufnehmen einer Kugel einer Kugelkopfkupplung eines Kraftfahrzeugs, eine Arretiereinrichtung, die eingerichtet ist zum mechanischen Fixieren der Kugelkupplung an der Kugel, und eine mit der Kugelkupplung fest verbundene Kopplungseinrichtung. Weitere Merkmale zur Ausgestaltung der kupplungsseitigen Komponente ergeben sich aus der Beschreibung von Ausgestaltungen des Kupplungsaufsatzes. Die Vorteile der kupplungsseitigen Komponente sind hierbei jeweils die gleichen wie bei den Ausgestaltungen des Kupplungsaufsatzes.

Weiter wird auch eine transportable Komponente für einen Kupplungsaufsatz nach einer der beschriebenen Ausführungsformen geschaffen, umfassend eine komplementäre Kopplungseinrichtung zur Anordnung an einer Transportvorrichtung. Weitere Merkmale zur Ausgestaltung der transportablen Komponente ergeben sich aus der Beschreibung von Ausgestaltungen des Kupplungsaufsatzes. Die Vorteile der transportablen Komponente sind hierbei jeweils die gleichen wie bei den Ausgestaltungen des Kupplungsaufsatzes.

Es wird zusätzlich auch eine Transportvorrichtungsanordnung geschaffen, umfassend eine Transportvorrichtung und eine hieran angeordnete transportable Komponente eines Kupplungsaufsatzes nach einer der beschriebenen Ausführungsformen. Eine Position der transportablen Komponente an der Transportvorrichtung wird hierbei, insbesondere in Bezug auf eventuell vorhandene Hilfsräder und eine mit einer Drehachse solcher Hilfsräder zusammenfallende Kippachse der Transportvorrichtungsanordnung, derart gewählt, dass ein Ankoppeln und Abkoppeln der transportablen Komponente an die kupplungsseitige Komponente auf ergonomische, insbesondere kraftschonende, Weise möglich ist.

Die Transportvorrichtung umfasst beispielsweise einen Stahlrahmen und/oder ein Kunststoffgehäuse aus einem geeigneten Kunststoff.

In einer Ausführungsform der Transportvorrichtungsanordnung ist vorgesehen, dass die Transportvorrichtung mindestens ein Hilfsrad umfasst, über das die Transportvorrichtungsanordnung im abgekoppelten Zustand der transportablen Komponente und der kupplungsseitigen Komponente bewegt werden kann. Hierdurch kann die Transportvorrichtungsanordnung im abgekoppelten Zustand auf einfache Weise durch eine oder mehrere Personen bewegt werden.

In einer weiterbildenden Ausführungsform der Transportvorrichtungsanordnung ist vorgesehen, dass das mindestens eine Hilfsrad ein- und ausklappbar ist und/oder im gekoppelten Zustand verstaut werden kann. Hierdurch können die Hilfsräder bei Nichtgebrauch geschützt werden.

Es wird sodann auch ein Transportsystem geschaffen, umfassend mindestens eine kupplungsseitige Komponente nach einer der beschriebenen Ausführungsformen und mindestens eine Transportvorrichtungsanordnung nach einer der beschriebenen Ausführungsformen.

Weitere Merkmale zur Ausgestaltung des Verfahrens ergeben sich aus der Beschreibung von Ausgestaltungen des Kupplungsaufsatzes. Die Vorteile des Verfahrens sind hierbei jeweils die gleichen wie bei den Ausgestaltungen des Kupplungsaufsatzes.

Nachfolgend wird die Erfindung anhand bevorzugter Ausführungsbeispiele unter Bezugnahme auf die Figuren näher erläutert. Hierbei zeigen:
- Fig. 1: eine schematische perspektivische Darstellung einer Ausführungsform des Kupplungsaufsatzes für eine Kugelkopfkupplung eines Kraftfahrzeugs;
- Fig. 2: eine weitere schematische perspektivische Darstellung der Ausführungsform des Kupplungsaufsatzes;
- Fig. 3: eine weitere schematische perspektivische Darstellung der Ausführungsform des Kupplungsaufsatzes;
- Fig. 4: ein schematisches Ablaufdiagramm einer Ausführungsform des Verfahrens zum Transportieren mindestens eines Transportgutes mittels eines Kupplungsaufsatzes;
- Fig. 5a-5c: schematische Darstellungen zur Verdeutlichung eines Ablaufs einer Ausführungsform des Verfahrens;
- Fig. 6: eine schematische perspektivische Darstellung einer kupplungsseitigen Komponente einer weiteren Ausführungsform des Kupplungsaufsatzes;
- Fig. 7: eine schematische perspektivische Darstellung einer Ausführungsform einer Transportvorrichtung und einer Transportvorrichtungsanordnung;
- Fig. 8a, 8b: schematische perspektivische Darstellungen einer weiteren Ausführungsform einer Transportvorrichtung und einer Transportvorrichtungsanordnung;
- Fig. 9: eine schematische perspektivische Darstellung einer weiteren Ausführungsform einer Transportvorrichtung und einer Transportvorrichtungsanordnung;
- Fig. 10a-10d: schematische perspektivische Darstellungen einer weiteren Ausführungsform einer Transportvorrichtung und einer Transportvorrichtungsanordnung;
- Fig. 11a-11c: schematische Darstellungen zur Verdeutlichung eines Ablaufs einer Ausführungsform des Verfahrens anhand einer Ausführungsform der Transportvorrichtung und einer Transportvorrichtungsanordnung;
- Fig. 12: eine schematische perspektivische Darstellung einer weiteren Ausführungsform einer Transportvorrichtung und einer Transportvorrichtungsanordnung;
- Fig. 13a, 13b: schematische perspektivische Darstellungen einer weiteren Ausführungsform einer Transportvorrichtung und einer Transportvorrichtungsanordnung.

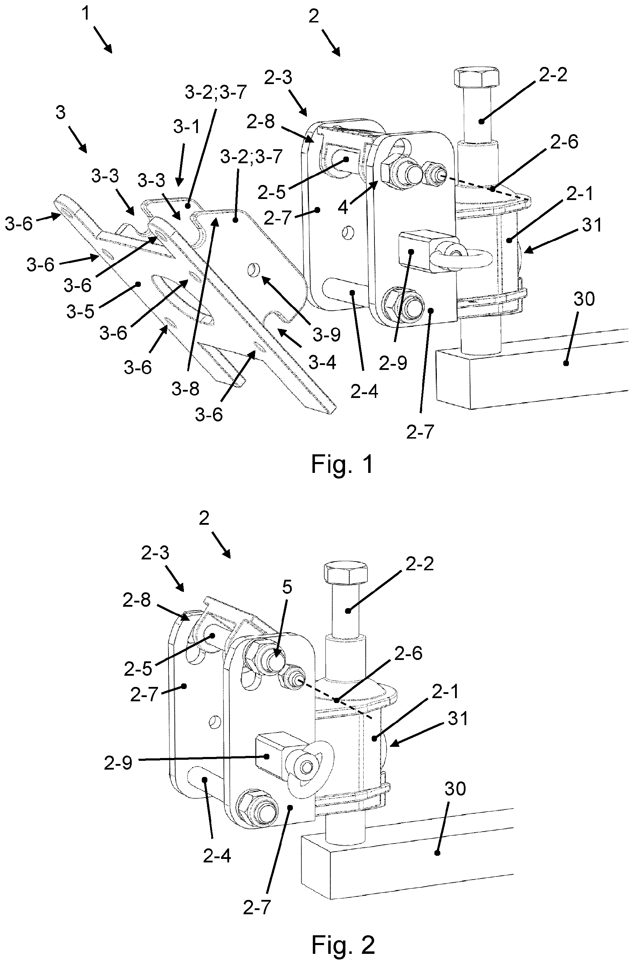

In Fig. 1 ist eine schematische perspektivische Darstellung einer Ausführungsform des Kupplungsaufsatzes 1 für eine Kugelkopfkupplung 30 eines Kraftfahrzeugs gezeigt. Der Kupplungsaufsatz 1 umfasst eine kupplungsseitige Komponente 2 und eine transportable Komponente 3.

Die kupplungsseitige Komponente 2 umfasst eine Kugelkupplung 2-1, die eingerichtet ist zum Aufnehmen einer Kugel 31 der Kugelkopfkupplung 30, eine Arretiereinrichtung 2-2, die eingerichtet ist zum mechanischen Fixieren der Kugelkupplung 2-1 an der Kugel 31, und eine mit der Kugelkupplung 2-1 fest verbundene Kopplungseinrichtung 2-3.

Die transportable Komponente 3 umfasst eine komplementäre Kopplungseinrichtung 3-1 zur Anordnung an einer Transportvorrichtung.

Die kupplungsseitige Komponente 2 und die transportable Komponente 3 können über die Kopplungseinrichtung 2-3 und die komplementäre Kopplungseinrichtung 3-1 mechanisch lösbar miteinander verbunden werden.

Es ist bei der in der Fig. 1 gezeigten Ausführungsform insbesondere vorgesehen, dass die Kopplungseinrichtung 2-3 ein bei Anordnung der Kugelkupplung 2-1 an der Kugel 31 horizontal verlaufendes erstes Querverbindungselement 2-4 aufweist. Vertikal beabstandet hierzu weist die Kopplungseinrichtung 2-3 ferner ein horizontal verlaufendes zweites Querverbindungselement 2-5 auf, das um eine parallel zum zweiten Querverbindungselement 2-5 verlaufende horizontale Drehachse 2-6 schwenkbar ist, sodass durch eine Schwenkbewegung ein Abstand zwischen dem ersten Querverbindungselement 2-4 und dem zweiten Querverbindungselement 2-5 im Bereich zwischen einer Verriegelungsstellung 4 und einer Entriegelungsstellung 5 (Fig. 2) des zweiten Querverbindungselements 2-5 verringert oder vergrößert werden kann.

Die Querverbindungselemente 2-4, 2-5 sind insbesondere zwischen zwei vertikal verlaufenden Trägerplatten 2-7 der Kopplungseinrichtung 2-3 angeordnet, wobei das erste Querverbindungselement 2-4 fest mit den beiden Trägerplatten 2-7 verschraubt (oder verschweißt) ist, das zweite Querverbindungselement 2-5 hingegen durch Durchgangslöcher in Form von Kreisbogensegmenten durch die Trägerplatten 2-7 hindurchgreifen kann und sich innerhalb des Kreisbogensegmentes um die Drehachse 2-6 herum bewegen kann.

Die Drehachse 2-6 und das zweite Querverbindungselement 2-5 sind zusammen beispielsweise scharnierartig ausgebildet. Das Scharnier umfasst dann insbesondere einen horizontal verlaufenden Bolzen, der mit der Drehachse 2-6 zusammenfällt und der mit den Trägerplatten 2-7 verschraubt (oder verschweißt) ist, und hohlzylinderförmige Elemente, die drehbar um den Bolzen herumgreifen und mit dem zweiten Querverbindungselement 2-5 verbunden sind.

Ferner weist die komplementäre Kopplungseinrichtung 3-1 insbesondere mindestens zwei Trägerelemente 3-2 auf, die jeweils eine obere Ausnehmung 3-3 und eine untere Ausnehmung 3-4 aufweisen, die bei Anordnung der komplementären Kopplungseinrichtung 3-1 an der Kopplungseinrichtung 2-3 zumindest teilweise um die Querverbindungselemente 2-4, 2-5 herum greifen (angekoppelter Zustand). Die Ausnehmungen 3-3, 3-4 können auch als Hakenmäuler bezeichnet werden. Die Ausnehmungen 3-3, 3-4 weisen insbesondere zumindest in einem innenliegenden Bereich einen kreisförmigen Verlauf bzw. die Form eines Kreisbogens auf. Die Trägerelemente 3-2 sind insbesondere an einer Verbindungsplatte 3-5 angeordnet, über die die transportable Komponente 3 an einer Transportvorrichtung (nicht gezeigt) angeordnet werden kann. Insbesondere sind die Trägerelemente 3-2 (insbesondere mit einer Längsseite bzw. längsseitigen Kante) senkrecht an der Verbindungsplatte 3-5 angeordnet, beispielsweise mit dieser verschweißt. Zum Befestigen der Verbindungsplatte 3-5 an der Transportvorrichtung sind Bohrungen 3-6 in der Verbindungsplatte 3-5 vorgesehen, über die die transportable Komponente 3 mit der Transportvorrichtung verschraubt werden kann. Grundsätzlich sind jedoch auch andere Befestigungsarten möglich, beispielsweise ein Verschweißen mit der Transportvorrichtung. Ferner kann die transportable Komponente 3 in anderen Ausführungsformen auch zumindest teilweise ein Teil der Transportvorrichtung sein, beispielsweise ein Teil eines Tragrahmens etc.

Insbesondere ist vorgesehen, dass die zwei Trägerelemente 3-2 als parallel zueinander im gekoppelten Zustand vertikal verlaufende Trägerplatten 3-7 ausgebildet sind, wobei die obere Ausnehmung 3-3 jeweils an einer oberen Kante der Trägerplatten 3-7 und die untere Ausnehmung 3-4 jeweils an einer unteren Kante der Trägerplatten 3-7 angeordnet sind. Insbesondere sind die Trägerplatten 3-7 an einer längsseitigen Kante mit der Verbindungsplatte 3-5 verschweißt.

Die Kugelkupplung 2-1 ist beispielsweise aus Stahlguss hergestellt. Die Trägerplatte 2-7 umfasst beispielsweise ein Stahlblech mit einer Stärke von 8 mm. Das erste Querverbindungselement 2-4 und das zweite Querverbindungselement 2-5 umfassen beispielsweise Stahlbolzen mit einem Durchmesser von 12 mm. Die Drehachse 2-6 umfasst beispielsweise einen Stahlbolzen mit einem Durchmesser von 8 mm. Die Trägerelemente 3-2 bzw. die Trägerplatten 3-7 umfassen beispielsweise Stahlbleche mit einer Stärke von 6 mm. Die Verbindungsplatte 3-5 umfasst beispielsweise ein Stahlblech mit einer Stärke von 5 mm. Die angegebenen Werkstoffe und Materialstärken bzw. Durchmesser sind lediglich beispielhaft genannt. Grundsätzlich können auch andere geeignete Werkstoffe und/oder Materialstärken bzw. Durchmesser verwendet werden.

Es ist in der in der Fig. 1 gezeigten Ausführungsform insbesondere vorgesehen, dass die Trägerplatten 3-7 an einer oberen Ecke 3-8 an einer beim Ankoppeln in Richtung der Kopplungseinrichtung 2-3 weisenden Seite abgeschrägt sind. Dies vereinfacht das Ankoppeln, insbesondere das Hineinschwenken, der komplementären Kopplungseinrichtung an die Kopplungseinrichtung und dient ferner dazu, den Riegel 2-8 bzw. das zweite Querverbindungselement 2-5 durch das Hineinschwenken ohne weiteres Zutun von der Verriegelungsstellung 4 in die Entriegelungsstellung 5 (Fig. 2) zu drücken.

Die Querverbindungselemente 2-4, 2-5 sind insbesondere zylinderförmig ausgebildet und haben beispielsweise eine Form von Bolzen. Das erste Querverbindungselement 2-4 ist in der gezeigten Ausführungsform fest mit den Trägerplatten 2-7 verschraubt.

Es ist in der gezeigten Ausführungsform insbesondere vorgesehen, dass die Kopplungseinrichtung 2-3 und die komplementäre Kopplungseinrichtung 3-1 mittels eines Riegels 2-8 miteinander ver- und entriegelbar sind. Der Riegel 2-8 umfasst in der gezeigten Ausführungsform das zweite Querverbindungselement 2-5, wobei die Riegelwirkung dadurch erreicht wird, dass das zweite Querverbindungselement 2-5 zwischen der Verriegelungsstellung 4 und der Entriegelungsstellung 5 (Fig. 2) bewegt wird und hierdurch wahlweise in die oberen Ausnehmungen 3-3 eingreift (Verriegelungsstellung 4, gezeigt in Fig. 1) und ein Aufschwenken der komplementären Kopplungseinrichtung 3-1 verhindert, oder nicht in die oberen Ausnehmungen 3-3 eingreift (Entriegelungsstellung 5, gezeigt in Fig. 2) und hierdurch ein ungehindertes Aufschwenken der komplementären Kopplungseinrichtung 3-1 ermöglicht.

In der Fig. 2 ist eine weitere schematische perspektivische Darstellung der kupplungsseitigen Komponente 2 der Ausführungsform nach Fig. 1 gezeigt. Die Fig. 2 zeigt hierbei die kupplungsseitige Komponente 2 in der Entriegelungsstellung 5, bei der ein Abstand zwischen dem ersten Querverbindungselement 2-4 und dem zweiten Querverbindungselement 2-5 maximal ist. Das zweite Querverbindungselement 2-5 wurde hierzu im Vergleich zu der in der Fig. 1 dargestellten Verriegelungsstellung 4 um die Drehachse 2-6 herum geschwenkt.

An dem Riegel 2-8 kann insbesondere ein (Hand-)Hebel (nicht gezeigt) angeordnet sein, um eine Betätigung des Riegels 2-8 durch einen Nutzer zu erleichtern.

Es kann vorgesehen sein, dass der Kupplungsaufsatz 1 mindestens einen an der Kopplungseinrichtung 2-3 und/oder an der komplementären Kopplungseinrichtung 3-1 angeordneten Verriegelungsstift 2-9 aufweist (Fig. 1), der derart angeordnet und dazu eingerichtet ist, im gekoppelten Zustand in eine hierfür vorgesehene Bohrung 3-9 der Kopplungseinrichtung 2-3 und der komplementären Kopplungseinrichtung 3-1 einzugreifen und hierdurch ein Lösen der mechanischen Verbindung zwischen der Kopplungseinrichtung 2-3 und der komplementären Kopplungseinrichtung 3-1 zu verhindern. In der gezeigten Ausführungsform wird der Verriegelungsstift 2-9 über ein Federelement (nicht gezeigt) in einer Verriegelungsstellung gehalten und muss herausgezogen werden, damit die komplementäre Kopplungseinrichtung 3-1 mit der Kopplungseinrichtung 2-3 verbunden werden kann oder damit eine Verbindung gelöst werden kann.

Weiterbildend kann vorgesehen sein, dass der Kupplungsaufsatz 1 mindestens ein Schloss (nicht gezeigt) aufweist, mit dem der Verriegelungsstift 2-9 zumindest im gekoppelten Zustand der Kopplungseinrichtung 2-3 und der komplementären Kopplungseinrichtung 3-1 gesichert werden kann.

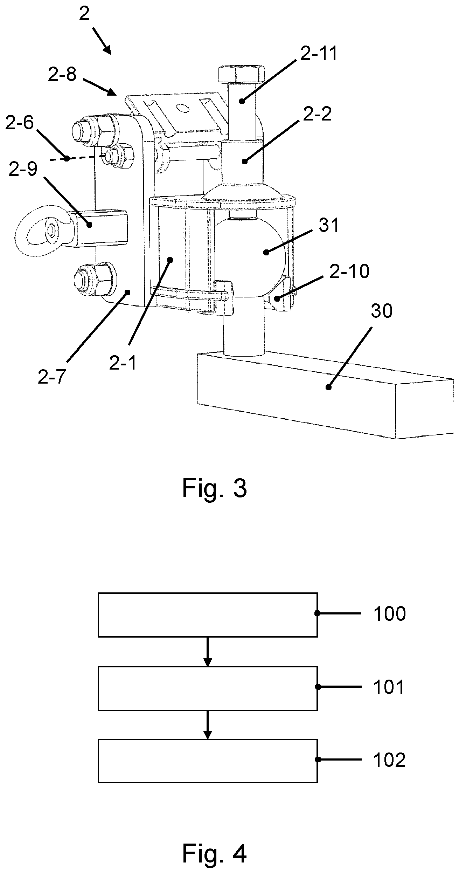

In der Fig. 3 ist eine andere perspektivische Ansicht der kupplungsseitigen Komponente 2 der Ausführungsform des Kupplungsaufsatzes gezeigt. Gezeigt ist eine Ansicht aus Richtung der Kugelkopfkupplung 30 des Kraftfahrzeugs. Die Kugelkupplung 2-1 umgreift die Kugel 31 und steht an einer Unterseite mit einem umlaufenden Kontaktelement 2-10, das insbesondere eine zumindest teilweise abgeschrägte oder runde Oberfläche parallel zu einer Kugeloberfläche aufweist, mit der Kugel 31 in mechanischem Kontakt. Die Arretiereinrichtung 2-2 umfasst in der gezeigten Ausführungsform eine Arretierschraube 2-11, die auf eine (insbesondere abgeflachte) Oberseite der Kugel 31 aufsetzt. Durch Hineindrehen der Arretierschraube 2-11 wird die Kugelkupplung 2-1 mechanisch fest mit der Kugel 31 verschraubt, indem die Kugel 31 fest zwischen dem umlaufenden Kontaktelement 2-10 und der Arretierschraube 2-11 eingespannt bzw. eingezwängt wird. Es ist beim Gebrauch des Kupplungsaufsatzes vorgesehen, dass diese Verbindung zwischen der Kugelkupplung 2-1 und der Kugel 31 nicht mehr gelöst wird, insbesondere nicht, wenn eine Transportvorrichtung transportiert werden soll. Dies erfolgt hingegen mittels des Ankoppelns und Abkoppelns der Transportvorrichtung zusammen mit der hieran angeordneten transportablen Komponente an bzw. von der kupplungsseitigen Komponente 2.

Es kann grundsätzlich vorgesehen sein, dass die Arretiereinrichtung 2-2 anders ausgebildet ist. Beispielsweise können auch mehr als eine Arretierschraube 2-11 vorgesehen sein und/oder ein Arretierhebel, mit dem die Kugelkupplung 2-1 an der Kugel 31 befestigt werden kann.

Die Fig. 4 zeigt ein schematisches Ablaufdiagramm einer Ausführungsform des Verfahrens zum Transportieren mindestens eines Transportgutes mittels eines Kupplungsaufsatzes nach einer der beschriebenen Ausführungsformen.

In einer Maßnahme 100 wird eine Kugelkupplung einer kupplungsseitigen Komponente des Kupplungsaufsatzes an einer Kugel einer Kugelkopfkupplung eines Kraftfahrzeugs angeordnet und daran fixiert.

In einer Maßnahme 101 wird das mindestens eine Transportgut in und/oder an und/oder auf einer Transportvorrichtung mit einer daran angeordneten transportablen Komponente des Kupplungsaufsatzes angeordnet.

In einer Maßnahme 102 wird die Transportvorrichtung mittels einer komplementären Kopplungseinrichtung der transportablen Komponente mit einer Kopplungseinrichtung der kupplungsseitigen Komponente mechanisch verbunden. Anschließend ist die Transportvorrichtung fest an dem Kraftfahrzeug befestigt und kann zusammen mit dem Kraftfahrzeug bewegt werden.

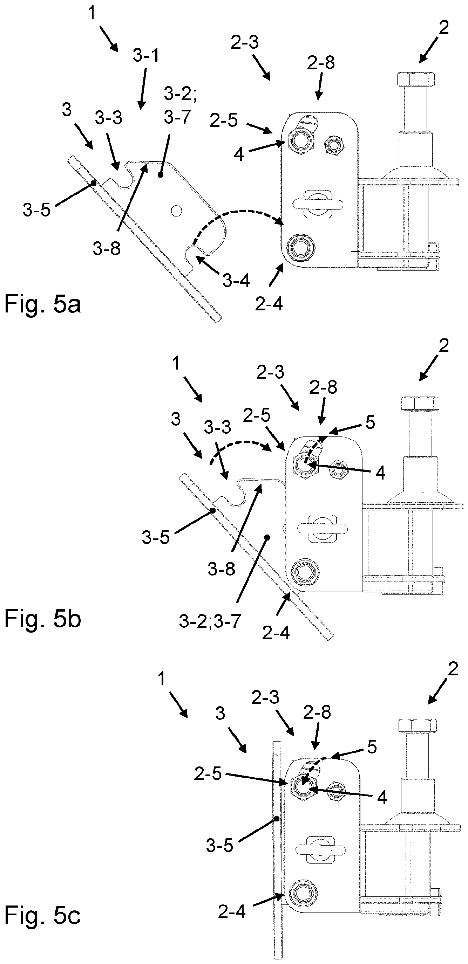

In den Figuren 5a, 5b und 5c ist eine Ausführungsform des Verfahrens verdeutlicht. Die hierbei gezeigte Ausführungsform des Kupplungsaufsatzes 1 ist wie die Ausführungsform ausgestaltet, die in den Figuren 1 bis 3 gezeigt ist. Gleiche Bezugszeichen bezeichnen gleiche Merkmale und Begriffe. Gezeigt ist jeweils eine Seitenansicht des Kupplungsaufsatzes 1.

Im Rahmen von Maßnahme 102 ist hierbei vorgesehen, dass zum Koppeln der komplementären Kopplungseinrichtung 3-1 mit der Kopplungseinrichtung 2-3 zuerst über die unteren Ausnehmungen 3-4 der Trägerelemente 3-2 (Trägerplatten 3-7) der komplementären Kopplungseinrichtung 3-1 eine mechanische Verbindung mit einem ersten Querverbindungselement 2-4 der Kopplungseinrichtung 2-3 hergestellt wird, bei der die unteren Ausnehmungen 3-4 das erste Querverbindungselement 2-4 umgreifen. Hierzu wird die transportable Komponente 3 (zusammen mit einer nicht gezeigten Transportvorrichtung) in Richtung der kupplungsseitigen Komponente 2 bewegt (in Fig. 5a durch den Pfeil angedeutet), wobei die Ausnehmungen 3-4 derart an dem ersten Querverbindungselement 2-4 angeordnet werden, dass die Ausnehmungen 3-4 diese von oben her umgreifen (Fig. 5b).

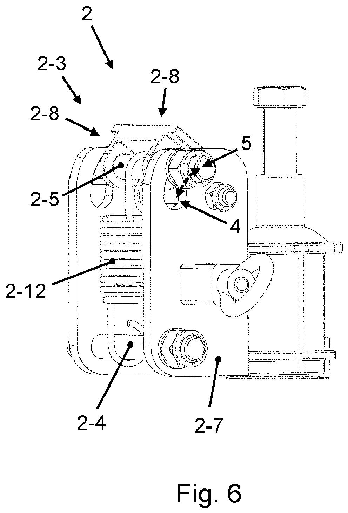

Anschließend wird die transportable Komponente 3, insbesondere die komplementäre Kopplungseinrichtung 3-1, mit der hieran angeordneten, nicht gezeigten Transportvorrichtung zusammen, um das erste Querverbindungselement 2-4 herum geschwenkt (in Fig. 5b durch den Pfeil angedeutet), sodass die oberen Ausnehmungen 3-3 der Trägerelemente 3-2 (Trägerplatten 3-7) in eine Position gebracht werden, in der das zweite Querverbindungselement 2-5 der Kopplungseinrichtung 2-3 in die oberen Ausnehmungen 3-3 eingebracht werden kann und die oberen Ausnehmungen 3-3 um das zweite Querverbindungselement 2-5 herum greifen können (Fig. 5c). Greift das zweite Querverbindungselement 2-5 in die oberen Ausnehmungen 3-3 hinein, so sind die komplementäre Kopplungseinrichtung 3-1 und die Kopplungseinrichtung 2-3 miteinander verriegelt, da das Querverbindungselement 2-5 sich nach einem Anordnen bzw. Einrasten in die oberen Ausnehmungen 3-3 in der Verriegelungsstellung 4 befindet. Das Hineinschwenken wird insbesondere durch die abgeschrägten Ecken 3-8 der Trägerelemente 3-2 (Trägerplatten 3-7) unterstützt. Beim Einschwenken wird das zweite Querverbindungselement 2-5 durch die Schwenkbewegung und vermittelt durch einen Kontakt mit den abgeschrägten Ecken 3-8 aus der Verriegelungsstellung 4 in die Entriegelungsstellung 5 bewegt (wie in Fig. 5b durch den kurzen Pfeil angedeutet). Erst bei Erreichen der oberen Ausnehmungen 3-3 springt das zweite Querverbindungselement 2-5 zurück in die Verriegelungsstellung 4 (wie in Fig. 5c durch den kurzen Pfeil angedeutet). Dies kann noch unterstützt werden durch ein Federelement, wie dies nachfolgend mit Bezug auf die Fig. 6 beschrieben ist.

Zum Entriegeln werden die in den Figuren 5a, 5b und 5c gezeigten Schritte in umgekehrter Reihenfolge ausgeführt, wobei das zweite Querverbindungselement 2-5 aktiv aus der Verriegelungsstellung 4 in die Entriegelungsstellung 5, das heißt, nach oben hin um die Drehachse herum bewegt werden muss, sodass das zweite Querverbindungselement 2-5 die oberen Ausnehmungen 3-3 wieder freigibt. Hierzu wird insbesondere der Riegel 2-8, das heißt insbesondere auch das zweite Querverbindungselement 2-5 manuell betätigt, beispielsweise mittels eines (nicht gezeigten) (Hand-)Hebels.

Die Fig. 6 zeigt eine schematische Darstellung einer kupplungsseitigen Komponente 2 zur Verdeutlichung einer Ausführungsform des Kupplungsaufsatzes. Der Kupplungsaufsatz ist grundsätzlich wie die in den Figuren 1 bis 3 gezeigten Ausführungsformen ausgestaltet. Gleiche Bezugszeichen bezeichnen gleiche Begriffe und Merkmale. Bei der Ausführungsform ist vorgesehen, dass die kupplungsseitige Komponente 2 ein Federelement 2-12 aufweist, das derart an dem zweiten Querverbindungselement 2-5 angeordnet ist, dass das zweite Querverbindungselement 2-5 mittels des mindestens einen Federelements 2-12 in die Verriegelungsstellung 4 gezogen wird. Das Federelement 2-12 ist als Schraubenzugfeder ausgebildet, deren Enden das erste Querverbindungselement 2-4 und das zweite Querverbindungselement 2-5 mittels Haken umgreifen. Um das zweite Querverbindungselement 2-5 von der Verriegelungsstellung 4 in die Entriegelungsstellung 5 zu bewegen, muss zusätzlich eine Federkraft des Federelements 2-12 überwunden werden. Die in den Figuren 1, 2 und 3 sowie 5a, 5b und 5c gezeigten Ausführungsformen weisen insbesondere ebenfalls mindestens ein solches Federelement 2-12 auf, obwohl dies aus Gründen der Übersichtlichkeit nicht gezeigt ist.

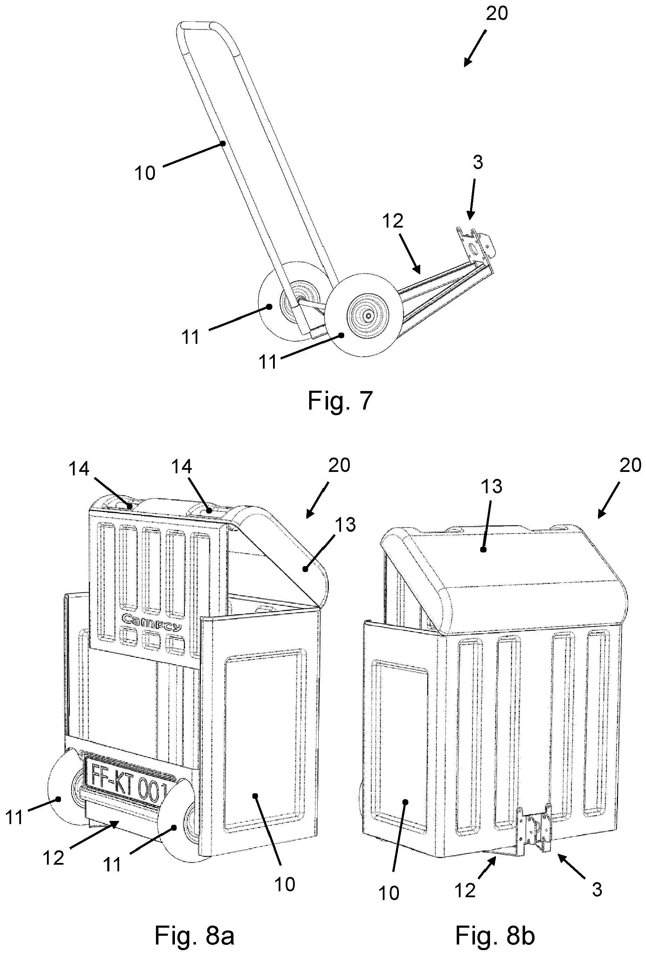

In der Fig. 7 ist eine schematische perspektivische Darstellung einer Ausführungsform einer Transportvorrichtung 10 mit einer daran angeordneten transportablen Komponente 3 des Kupplungsaufsatzes gezeigt. Die Transportvorrichtung 10 ist als Sackkarre ausgebildet und weist Hilfsräder 11 auf. An einer den Hilfsrädern 11 gegenüberliegenden Seite eines Auflagerahmens 12 der Sackkarre ist der Auflagerahmen 12 fest mit der transportablen Komponente 3 verbunden, beispielsweise verschraubt, verschweißt und/oder verrastet. Die Transportvorrichtung 10 und die transportable Komponente 3 bilden zusammen eine Transportvorrichtungsanordnung 20. Die Sackkarre kann ohne ein Transportgut oder mit einem darauf angeordneten Transportgut an die kupplungsseitige Komponente angekoppelt werden. Hierzu wird die Sackkarre insbesondere angekippt bzw. um die Drehachse der Hilfsräder 11 geschwenkt, um die transportable Komponente 3 auf die notwendige Höhe zu heben, sodass zum Ankoppeln die in den Figuren 5a, 5b und 5c schematisch gezeigten Maßnahmen ausgeführt werden können.

In den Figuren 8a und 8b sind schematische perspektivische Darstellungen einer weiteren Ausführungsform einer Transportvorrichtung 10 mit einer daran angeordneten transportablen Komponente 3 des Kupplungsaufsatzes aus unterschiedlichen Richtungen gezeigt. Die Transportvorrichtung 10 ist als Transportbox (bestehend z.B. aus einem geeigneten Kunststoff) ausgebildet und weist Hilfsräder 11 auf. An einer den Hilfsrädern 11 gegenüberliegenden Seite eines Auflagerahmens 12 (z.B. aus Stahl) der Transportbox ist der Auflagerahmen 12 fest mit der transportablen Komponente 3 verbunden, beispielsweise verschraubt, verschweißt und/oder verrastet. Die Transportvorrichtung 10 und die transportable Komponente 3 bilden zusammen eine Transportvorrichtungsanordnung 20. Die Transportbox kann ohne ein Transportgut oder mit einem darin enthaltenen Transportgut an die kupplungsseitige Komponente angekoppelt werden. Hierzu wird die Transportbox insbesondere angekippt bzw. um die Drehachse der Hilfsräder 11 geschwenkt, um die transportable Komponente 3 auf die notwendige Höhe zu heben, sodass zum Ankoppeln die in den Figuren 5a, 5b und 5c schematisch gezeigten Maßnahmen ausgeführt werden können. Die Transportbox weist insbesondere ein Gehäuse auf, das mittels eines Gehäusedeckels 13 geöffnet werden kann. An dem Gehäusedeckel 13 sind Handgriffe 14 angeordnet, mit denen die Transportvorrichtung 10 bzw. die Transportvorrichtungsanordnung 20 im abgekoppelten Zustand manövriert werden kann.

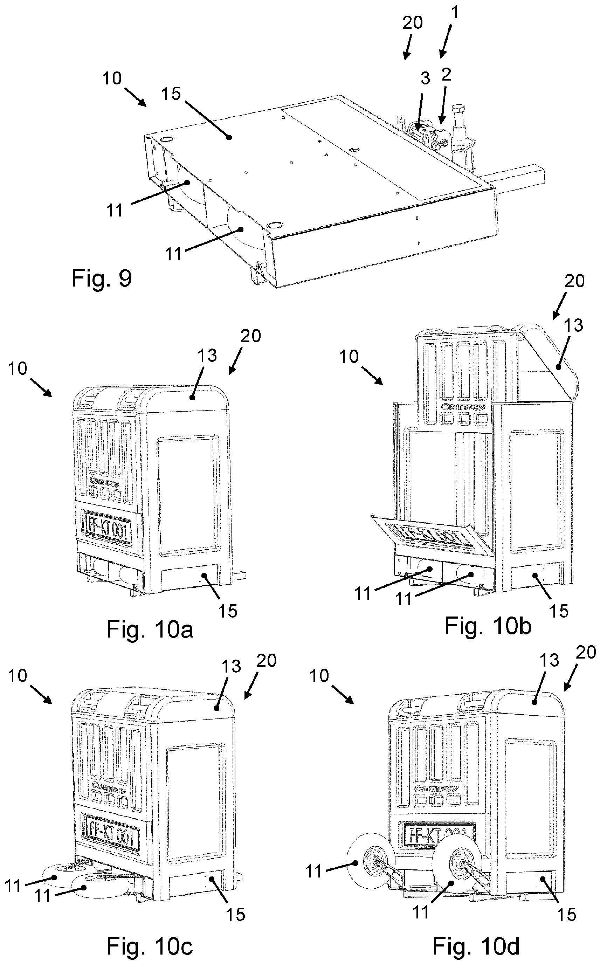

Die Fig. 9 zeigt eine schematische perspektivische Darstellung einer Transportvorrichtung 10, die als Basisplattform 15 (bestehend z.B. aus einem Stahlrahmen und Stahlblechen) ausgebildet ist. Die Basisplattform 15 ist mit der transportablen Komponente 3 fest verbunden, beispielsweise verschraubt und/oder verschweißt. Gezeigt ist der Zustand, bei der die Transportvorrichtung 10 zusammen mit der transportablen Komponente 3 an der kupplungsseitigen Komponente 2 angeordnet ist. Die Transportvorrichtung 10 weist ferner einklappbare Hilfsräder 11 auf, die im eingeklappten Zustand vollständig in einem hierfür vorgesehenen Stauraum der Basisplattform 15 verstaut werden können.

In den Figuren 10a bis 10d sind schematische perspektivische Darstellungen einer weiteren Ausführungsform einer Transportvorrichtung 10 gezeigt. Die Transportvorrichtung 10 umfasst eine Transportbox (bestehend z.B. aus einem geeigneten Kunststoff), die auf der in der Fig. 9 gezeigten Basisplattform 15 angeordnet ist. Bis auf die Basisplattform 13 ist die Transportvorrichtung 10 ansonsten wie die in den Figuren 8a und 8b gezeigte Transportvorrichtung 10 ausgestaltet.

Die Fig. 10a zeigt die Transportvorrichtung 10 im geschlossenen Zustand. Die Fig. 10b zeigt die Transportvorrichtung 10 im teilweise geöffneten Zustand, bei dem ein Gehäusedecke 13 teilweise geöffnet ist. Die Fig. 10c zeigt die Transportvorrichtung 10 im geschlossenen Zustand bei teilweise ausgeklappten Hilfsrädern 11. Die Fig. 10d zeigt die Hilfsräder 11 im vollständig ausgeklapptem Zustand. Mittels der ausgeklappten Hilfsräder 11 kann die Transportanordnung 20 im abgekoppelten Zustand manuell manövriert werden.

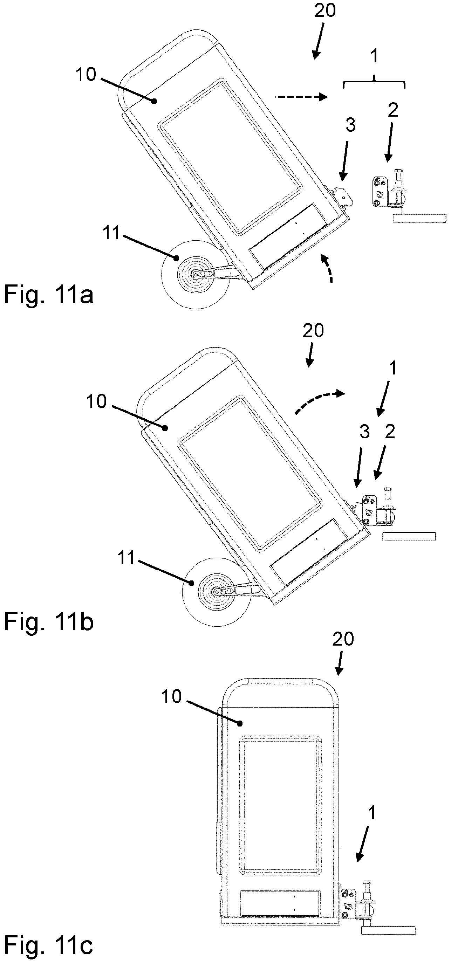

In den Figuren 11a, 11b und 11c sind schematische Darstellungen der Ausführungsform der in den Figuren 10a bis 10d gezeigten Transportvorrichtung 10 bzw. Transportvorrichtungsanordnung 20 in Seitenansichten gezeigt. Gezeigt ist die Abfolge beim Ankoppeln der Transportanordnung 20 an die kupplungsseitige Komponente 3 des Kupplungsaufsatzes 1. Die Abfolge entspricht hierbei der in den Figuren 5a, 5b und 5c gezeigten Abfolge, welche grundsätzlich bereits beschrieben wurde. Zu erkennen ist jedoch, dass die Transportvorrichtung 10 bzw. die Transportanordnung 20 auf den Hilfsrädern 11 in Richtung der kupplungsseitigen Komponente 3 und des Kraftfahrzeugs (nicht gezeigt) bewegt werden kann, wobei beim Ankoppeln der transportablen Komponente 3 an die kupplungsseitige Komponente 2 eine Höhe der transportablen Komponente 3 an eine Höhe der kupplungsseitigen Komponente 2 über einen Kippwinkel der Transportvorrichtungsanordnung 20 mit Bezug auf eine Drehachse der Hilfsräder 11 angepasst bzw. eingestellt werden kann. Ein Ankoppeln und Abkoppeln kann hierdurch auf einfache und kraftsparende Weise erfolgen. Nach dem Ankoppeln können die Hilfsräder 11 an einer Unterseite der Transportvorrichtung 10 in der Basisplattform 15 verstaut werden (Fig. 11c, vgl. auch Fig. 9 und Fig. 10b). Die Transportvorrichtung 10 ist über den Kupplungsaufsatz 1 dann fest mit der Kugelkopfkupplung des Kraftfahrzeugs verbunden und kann anschließend zusammen mit dem Kraftfahrzeug bewegt werden. Am Zielort werden die Maßnahmen zum Abkoppeln in umgekehrter Reihenfolge durchgeführt.

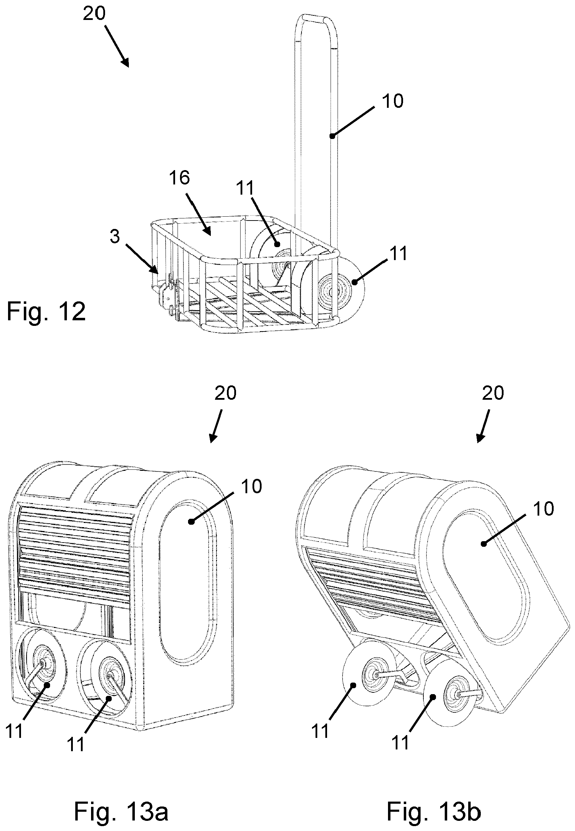

In der Fig. 12 ist eine schematische perspektivische Darstellung einer weiteren Ausführungsform der Transportvorrichtung 10 gezeigt. Die Transportvorrichtung 10 umfasst eine Sackkarre mit einem Transportkorb 16. Ansonsten ist die Ausführungsform wie die in der Fig. 7 gezeigte Ausführungsform ausgestaltet. Es kann auch vorgesehen sein, dass der Transportkorb 16 abnehmbar ausgestaltet ist.

In den Figuren 13a und 13b sind schematische perspektivische Darstellungen einer weiteren Ausführungsform der Transportvorrichtung 10 gezeigt. Die Transportvorrichtung 10 umfasst eine Transportbox (bestehend z.B. aus einem geeigneten Kunststoff) mit einem rolltorartigen Zugang. Ferner weist die Ausführungsform ausklappbare Hilfsräder auf. Auf einer in den Figuren 13a und 13b abgewandt dargestellten Seite ist die transportable Komponente angeordnet.

### Bezugszeichenliste

- 1: Kupplungsaufsatz
- 2: kupplungsseitige Komponente
- 2-1: Kugelkupplung
- 2-2: Arretiereinrichtung
- 2-3: Kopplungseinrichtung
- 2-4: erstes Querverbindungselement
- 2-5: zweites Querverbindungselement
- 2-6: horizontale Drehachse
- 2-7: Trägerplatte
- 2-8: Riegel
- 2-9: Verriegelungsstift
- 2-10: Kontaktelement
- 2-11: Arretierschraube
- 2-12: Federelement
- 3: transportable Komponente
- 3-1: komplementäre Kopplungseinrichtung
- 3-2: Trägerelement
- 3-3: obere Ausnehmung
- 3-4: untere Ausnehmung
- 3-5: Verbindungsplatte
- 3-6: Bohrung
- 3-7: Trägerplatte
- 3-8: obere Ecke
- 3-9: Bohrung
- 4: Verriegelungsstellung
- 5: Entriegelungsstellung
- 10: Transportvorrichtung
- 11: Hilfsrad
- 12: Auflagerahmen
- 13: Gehäusedeckel
- 14: Handgriff
- 15: Basisplattform
- 16: Transportkorb
- 20: Transportvorrichtungsanordnung
- 30: Kugelkopfkupplung
- 31: Kugel
- 100-102: Maßnahmen des Verfahrens

## Patentansprüche

1. Kupplungsaufsatz (1) für eine Kugelkopfkupplung (30) eines Kraftfahrzeugs, umfassend:
eine kupplungsseitige Komponente (2), mit
einer Kugelkupplung (2-1), die eingerichtet ist zum Aufnehmen einer Kugel (31) der Kugelkopfkupplung (30), und einer Arretiereinrichtung (2-2), die eingerichtet ist zum mechanischen Fixieren der Kugelkupplung (2-1) an der Kugel (31), und
einer mit der Kugelkupplung (2-1) fest verbundenen Kopplungseinrichtung (2-3); und
eine transportable Komponente (3), mit
einer komplementären Kopplungseinrichtung (3-1) zur Anordnung an einer Transportvorrichtung (10),
wobei die kupplungsseitige Komponente (2) und die transportable Komponente (3) über die Kopplungseinrichtung (2-3) und die komplementäre Kopplungseinrichtung (3-1) mechanisch lösbar miteinander verbunden sind oder mechanisch lösbar miteinander verbunden werden können.

2. Kupplungsaufsatz (1) nach Anspruch 1, **dadurch gekennzeichnet, dass** die Kopplungseinrichtung (2-3) und die komplementäre Kopplungseinrichtung (3-1) mittels eines Riegels (2-8) miteinander ver- und entriegelbar sind.

3. Kupplungsaufsatz (1) nach Anspruch 1 oder 2, **dadurch gekennzeichnet, dass** die Kopplungseinrichtung (2-3) ein bei Anordnung der Kugelkupplung (2-1) an der Kugel (31) horizontal verlaufendes erstes Querverbindungselement (2-4) aufweist, wobei die Kopplungseinrichtung (2-3) vertikal beabstandet hierzu ein horizontal verlaufendes zweites Querverbindungselement (2-5) aufweist, das um eine parallel zum zweiten Querverbindungselement (2-5) verlaufende horizontale Drehachse (2-6) schwenkbar ist, sodass durch eine Schwenkbewegung ein Abstand zwischen dem ersten Querverbindungselement (2-4) und dem zweiten Querverbindungselement (2-5) im Bereich zwischen einer Verriegelungsstellung (4) und einer Entriegelungsstellung (5) des zweiten Querverbindungselements (2-5) verringert oder vergrößert werden kann; und
wobei die komplementäre Kopplungseinrichtung (3-1) mindestens ein Trägerelement (3-2) aufweist, das eine obere Ausnehmung (3-3) und eine untere Ausnehmung (3-4) aufweist, die bei Anordnung der komplementären Kopplungseinrichtung (3-1) an der Kopplungseinrichtung (2-3) zumindest teilweise um die Querverbindungselemente (2-4,2-5) herum greifen.

4. Kupplungsaufsatz (1) nach Anspruch 3, **dadurch gekennzeichnet, dass** das mindestens eine Trägerelement (3-2) parallel zueinander im gekoppelten Zustand vertikal verlaufende Trägerplatten (3-7) umfasst, wobei die obere Ausnehmung (3-3) jeweils an einer oberen Kante der Trägerplatten (3-7) und die untere Ausnehmung (3-4) jeweils an einer unteren Kante der Trägerplatten (3-7) angeordnet sind.

5. Kupplungsaufsatz (1) nach Anspruch 4, **dadurch gekennzeichnet, dass** die Trägerplatten (3-7) an einer oberen Ecke (3-8) an einer beim Ankoppeln in Richtung der Kopplungseinrichtung (2-3) weisenden Seite abgeschrägt sind.

6. Kupplungsaufsatz (1) nach einem der Ansprüche 3 bis 5, **dadurch gekennzeichnet, dass** die kupplungsseitige Komponente (2) mindestens ein Federelement (2-12) aufweist, das derart an dem zweiten Querverbindungselement (2-5) angeordnet ist, dass das zweite Querverbindungselement (2-5) mittels des mindestens einen Federelements (2-12) in die Verriegelungsstellung (4) gezogen wird.

7. Kupplungsaufsatz (1) nach einem der vorangegangenen Ansprüche, **gekennzeichnet durch** mindestens einen an der Kopplungseinrichtung (2-3) und/oder an der komplementären Kopplungseinrichtung (3-1) angeordneten Verriegelungsstift (2-9), der derart angeordnet und dazu eingerichtet ist, im gekoppelten Zustand in hierfür vorgesehene Bohrungen (3-6) der Kopplungseinrichtung (2-3) und/oder der komplementären Kopplungseinrichtung (3-1) einzugreifen und hierdurch ein Lösen der mechanischen Verbindung zwischen der Kopplungseinrichtung (2-3) und der komplementären Kopplungseinrichtung (3-1) zu verhindern.

8. Kupplungsaufsatz (1) nach Anspruch 7, **gekennzeichnet durch** mindestens ein Schloss, mit dem der mindestens eine Verriegelungsstift (2-9) zumindest im gekoppelten Zustand der Kopplungseinrichtung (2-3) und der komplementären Kopplungseinrichtung (3-1) gesichert werden kann.

9. Kupplungsseitige Komponente (2) für einen Kupplungsaufsatz (1) nach einem der Ansprüche 1 bis 8, umfassend eine Kugelkupplung (2-1), die eingerichtet ist zum Aufnehmen einer Kugel (31) einer Kugelkopfkupplung (30) eines Kraftfahrzeugs, eine Arretiereinrichtung (2-2), die eingerichtet ist zum mechanischen Fixieren der Kugelkupplung (2-1) an der Kugel (31), und eine mit der Kugelkupplung (2-1) fest verbundene Kopplungseinrichtung (2-3).

10. Transportable Komponente (3) für einen Kupplungsaufsatz (1) nach einem der Ansprüche 1 bis 8, umfassend eine komplementäre Kopplungseinrichtung (3-1) zur Anordnung an einer Transportvorrichtung (10).

11. Transportvorrichtungsanordnung (20), umfassend eine Transportvorrichtung (10) und eine hieran angeordnete transportable Komponente (3) eines Kupplungsaufsatzes (1) nach Anspruch 10.

12. Transportvorrichtungsanordnung nach Anspruch 11, **dadurch gekennzeichnet, dass** die Transportvorrichtung (10) mindestens ein Hilfsrad (11) umfasst, über das die Transportvorrichtungsanordnung (20) im abgekoppelten Zustand der transportablen Komponente (3) und der kupplungsseitigen Komponente (2) bewegt werden kann.

13. Transportvorrichtungsanordnung (20) nach Anspruch 12, **dadurch gekennzeichnet, dass** das mindestens eine Hilfsrad (11) ein- und ausklappbar ist und/oder im gekoppelten Zustand verstaut werden kann.

14. Transportsystem, umfassend mindestens eine kupplungsseitige Komponente (2) nach Anspruch 9 und mindestens eine Transportvorrichtungsanordnung (20) nach einem der Ansprüche 11 bis 13.

15. Verfahren zum Transportieren mindestens eines Transportgutes mittels eines Kupplungsaufsatzes (1) nach einem der vorangegangenen Ansprüche 1 bis 8, wobei eine Kugelkupplung (2-1) einer kupplungsseitigen Komponente (2) des Kupplungsaufsatzes (1) an einer Kugel (31) einer Kugelkopfkupplung (30) eines Kraftfahrzeugs angeordnet und daran fixiert wird oder ist,
wobei das mindestens eine Transportgut in und/oder an und/oder auf einer Transportvorrichtung (10) mit einer daran angeordneten transportablen Komponente (3) des Kupplungsaufsatzes (1) angeordnet wird oder ist, und wobei die Transportvorrichtung (10) mittels einer komplementären Kopplungseinrichtung (3-1) der transportablen Komponente (3) mit einer Kopplungseinrichtung (2-3) der kupplungsseitigen Komponente (2) mechanisch verbunden wird oder verbunden ist.

16. Verfahren nach Anspruch 15, **dadurch gekennzeichnet, dass** zum Koppeln der komplementären Kopplungseinrichtung (3-1) mit der Kopplungseinrichtung (2-3) zuerst über eine untere Ausnehmung (3-4) von mindestens einem Trägerelement (3-2) der komplementären Kopplungseinrichtung (3-1) eine mechanische Verbindung mit einem ersten Querverbindungselement (2-4) der Kopplungseinrichtung (2-3) hergestellt wird, bei der die untere Ausnehmung (3-4) das erste Querverbindungselement (2-4) umgreift, und anschließend die komplementäre Kopplungseinrichtung (3-1) mit der hieran angeordneten Transportvorrichtung (10) zusammen um das erste Querverbindungselement (2-4) herum geschwenkt wird, sodass eine obere Ausnehmung (3-3) des mindestens einen Trägerelementes (3-2) in eine Position gebracht wird, in der ein zweites Querverbindungselement (2-5) der Kopplungseinrichtung (2-3) in die obere Ausnehmung (3-3) eingebracht werden kann und die obere Ausnehmung (3-3) um das zweite Querverbindungselement (2-5) herum greifen kann.
